Europäisches Patentamt

European Patent Office

Office européen des brevets

(19)

(11) Numéro de publication : **0 495 711 A1**

# (12) DEMANDE DE BREVET EUROPEEN

(21) Numéro de dépôt : **92400098.7**

(22) Date de dépôt : **15.01.92**

(51) Int. Cl.⁵ : **A61C 8/00**

(30) Priorité : **16.01.91 FR 9100450**

(43) Date de publication de la demande :
**22.07.92 Bulletin 92/30**

(84) Etats contractants désignés :
**AT CH DE ES IT LI**

(71) Demandeur : **Brauner, Serge**
**5, avenue de l'Opéra**
**F-75001 Paris (FR)**

(72) Inventeur : **Brauner, Serge**
**5, avenue de l'Opéra**
**F-75001 Paris (FR)**

(54) **Implant endo osseux pour ancrage de prothèses dentaires son instrumentation de guidage, de forage, de fraisage.**

(57) La présente invention concerne un système implantable impacté de technique enfouie comportant un fût cylindrique central (1) destiné à recevoir une tête d'implant après cicatrisation osseuse. Ledit fût central est relié à deux cylindres latéraux (2) par l'intermédiaire de deux lames (3).

Un filetage intérieur (4) permet de fixer un élément complémentaire pouvant être non limitativement

    soit une vis d'obturation temporaire (5)
    ou une vis de cicatrisation muqueuse (6)
    ou un porte implant (7)
    ou une tête d'implant. (8)

La présente invention concerne également un système de guidage anti-rotatoire ; des forets et des fraises calibrés à butée. Ceci afin d'assurer un contact intime entre la cavité réalisée et l'intrados de l'implant.

FIG.1

EP 0 495 711 A1

L'implant dentaire endo osseux est constitué d'une pièce métallique biocompatible avec le milieu gingivo-osseux , intégrée dans l'os, et destinée à servir d'ancrage ou de fixation à des prothèses amovibles ou fixes.

Deux types d'implants sont généralement utilisés :

– Les implants faisant appel à une technique non enfouie dans l'os.

– Les implants faisant appel à une technique enfouie dans l'os.

En ce qui concerne le dessin des implants, il existe deux types de forme généralement utilisées:

– Les fûts cylindriques vissés ou impactées.

– Les lames ajourées ou non impactés.

La présente invention concerne un système implantable impacté combinant les deux formes existantes et résolvant par un système de guidage et d'instrumentation calibrée en epaisseur et profondeur, le délicat problème de l'insertion axiale desdits implants et leur contact intime avec la cavité réalisée dans l'os.

L'état de l'art montre qu'il est possible d'améliorer les performances des implants existants.

L'état de la technique peut être défini notamment par les brevets 72 26 236 "ORATRONIC INC" décrivant un implant de type lame présentant une partie logée dans une tranchée réalisée dans l'os à l'aide d'une fraise montée sur une turbine à grande vitesse.

Un col et une tête d'implant relient ladite lame à une superstructure prothètique.

Le non guidage des fraises peut contribuer à un non calibrage des implants si la tranchée n'est pas parfaitement rectiligne et homogène.

Brevet DAVIDAS / POULMAIRE          88 Ø7 483 décrit une lame ajourée combinée à un fût central. Le manque d'instrumentation calibrée et guidée ne permet pas de positionner de façon précise l'implant selon un axe préférentiel.

Brevet BENHAMOU          87 Ø1 294 décrit un implant cylindrique doté d'un logement axial destiné à recevoir un moignon support de prothèse. Cet implant est caractérisé par le fait qu'il est prolongé dans sa partie inférieure d'au moins une lame mince et ajourée.

Brevet allemand / KOCH WERNER CUTZ 76 Ø3 895 Décrit un implant comprenant une lame verticale ajourée et un fût cylindrique central ainsi que son dispositif de guidage. cylindriques ( trois au lieu d'un ) ; la forme non ajourée de la lame et dans le dessin des guides qui dans le brevet 76 Ø3 895 présentent une possiblilité de rotation alors qu'il est impératif que le fraisage à partir d'un axe central soit exécuté parfaitement rectiligne.

Le présent brevet décrit un système implantaire utilisé en technique dite enfouie .

Comprenant : l'implant proprement dit et l'instrumentation nécessaire à sa mise en place . En effet , il est indispensable de disposer d'une instrumentation qui permet une insertion rigoureusement axiale, un forage et un fraisage calibrés, de façon à assurer un blocage et un contact intime de l'implant avec la cavité en épaisseur, en longueur et profondeur

L'implant selon l'invention comprend un fût cylindrique central (1) déterminant l'axe d'insertion préférentiel du système et possédant dans sa partie superficielle un trou borgne fileté (4) permettant le vissage d'une vis de protection (5) ou d'une vis de cicatrisation (6) ou d'un porte implant (7) ou ultérieurement après cicatrisation osseuse d'un insert prothètique (8)

Le cylindre central (1) comprend à sa partie profonde une perforation (9) permettant une ossification cicatricielle et assurant une rétention additionnelle dudit implant.

Le cylindre central est relié à deux cylindres latéraux (2) par l'intermédiaire de deux lames verticales (3), ne sort pas du cadre de la présente invention si les lames sont de sections différentes : par exemple carrée ou triangulaire.

Sans sortir du cadre de l'invention , des perforations pourront être réalisées dans les éléments cylindriques latéraux (2) ainsi que dans les lames (3).

La partie superficielle de la lame (3)sera située 2 mm minimum sous la corticale osseuse, afin de permettre une ossification cicatricielle qui s'opposera aux forces de tractions appliquées à l'implant.

La face superficielle des cylindres latéraux sera située à la meme profondeur sauf si ceux ci sont utilisés dans une autre réalisation de l'invention comme élément de fixation d'insert prothètique.

La mise en place de l'implant est favorisée par l'utilisation d'une instrumentation spécifique ,comprenant deux guides.

Le guide n°1 est utilisé pour la réalisation de deux forages latéraux dont l'axe est rigoureusement parallèle à l'axe d'un forage central réalisé initialement à l'aide d'un foret calibré (12).Le guide n°1 comprend un cylindre central et deux guides cylindriques latéraux calibrés,le cylindre central est logé dans le forage initial . Les guides cylindriques latéraux , reliés au cylindre central par deux bras comportent en leur centre une lumière cylindrique (13) de 4mm de hauteur et de 2 mm de diamètre assurant un guidage axial du foret de calibrage (14) . La partie cylindrique centrale comporte un trou borgne central porte implant (7). Le forage au travers des cylindres latéraux (13) est réalisé à l'aide d'un foret spécifique (14) comportant une partie non sécante (15) de dimension égale à la hauteur du guide axial latéral (13) Pour éviter un effet rotatoire du guide n°1 lors du passage du second puit latéral, une tige de fixation (16)est introduite dans le premier forage latéral précédemment réalisé, assurant un clavetage du guide n°1 .

Le guide n°2 utilise les deux puits latéraux pour stabiliser le système de réalisation de la tranchée verticale, logement des deux lames (3).

Il se comporte de deux demi cylindres (17) de diamètre égal au diamètre des puits latéraux préalablement réalisés et situés à même distance.

Un élément de liaison horizontal(18) de hauteur au moins égale à 3mm présente une ouverture (19) de 1mm de largeur pour le passage de la fraise à butée calibrée(2Ø) afin de réaliser la tranchée, destinée à recevoir les lames (3) Le dispositif est pourvu de deux ailettes (21)percées en leur centre permettant le vissage d' un élément de prise manuelle comme le porte implant (7) .

La fraise (2Ø) , montée sur contre angle à irrigation externe sera positionnée au centre du guide n°2 dans le puit central préalablement foré .

Les dispositifs de guidage n°1 et n°2 permettent ainsi la création d'un logement dans l'os parfaitement axé par rapport à l'axe d'insertion préférentiel et interdisent par le système de butée des forets et fraises nerf dentaire inférieur ou le plancher des sinus et des fosses nasales.

La cavité effectuée ,l'implant est présenté dans son logement ,tenu par le porte implant ,et impacté à l'aide d'un impacteur à maillet.

Le porte implant est alors dévissé et remplacé par la vis de protection.

Le vissage et dévissage des éléments filetés (5) (6) (7) (8) sont réalisés à l'aide d'un instrument à double fonction (18), comportant sur une face un tournevis (23) et sur la face opposée une clé (24) creusée dans le corps (25)dudit tournevis et destinée au vissage et dévissage de l'insert prothètique.

Le lambeau muqueux est suturé en attente d'une cicatrisation osseuse de quelques mois.

Après contrôle radiographique ,une calote de gencive est découpée ,permettant le remplacement de la dite vis de protection par soit une vis de cicatrisation muqueuse soit directement par le poste implantaire autorisant donc la mise en fonction mécanique de l'implant.

D'autres caractéristiques et avantages seront mieux compris à la lecture de la description accompagnée de dossiers annexés.

FIGURE 1 .Implant vu de face

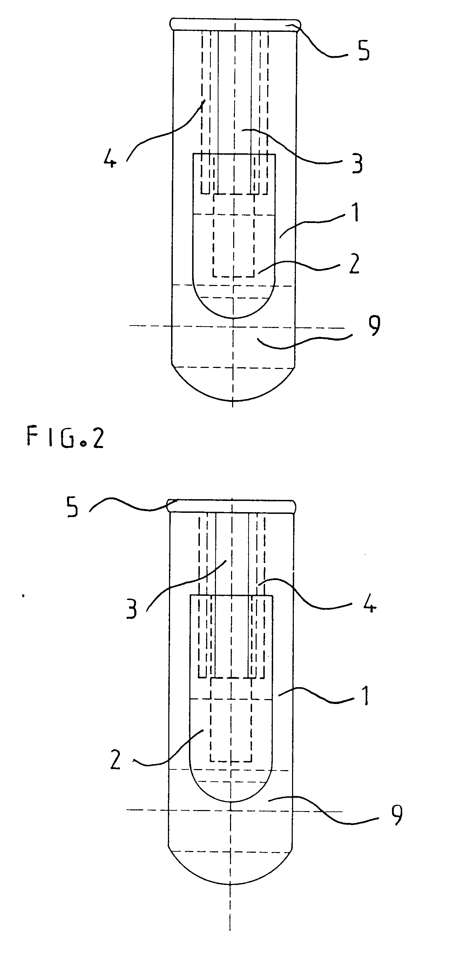

FIGURE 2 .Implant vu de profil

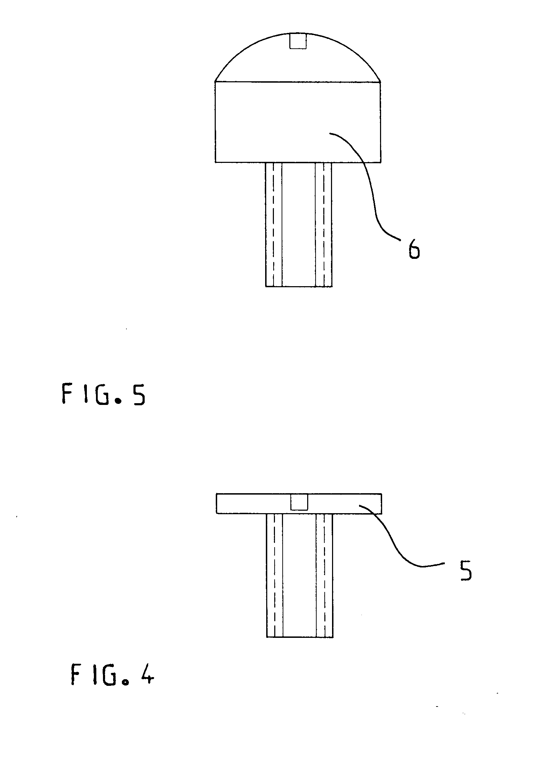

FIGURE 3 .Implant vu du dessus
FIGURE 4 .Vis de mise en nourrice ou de protection

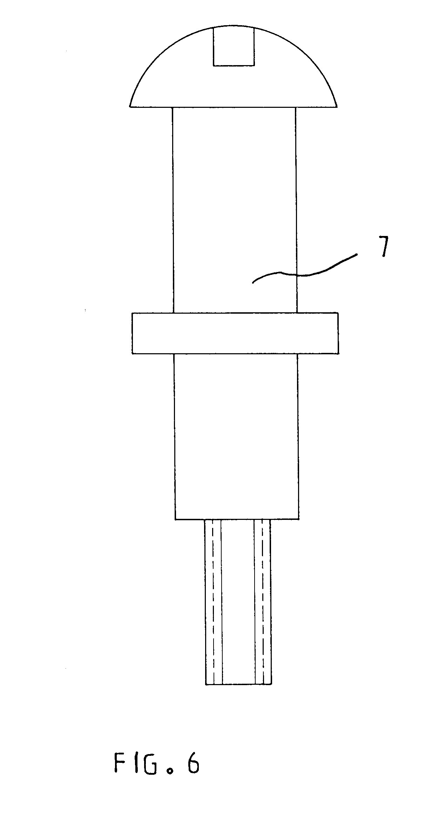

FIGURE 6 .Porte implant

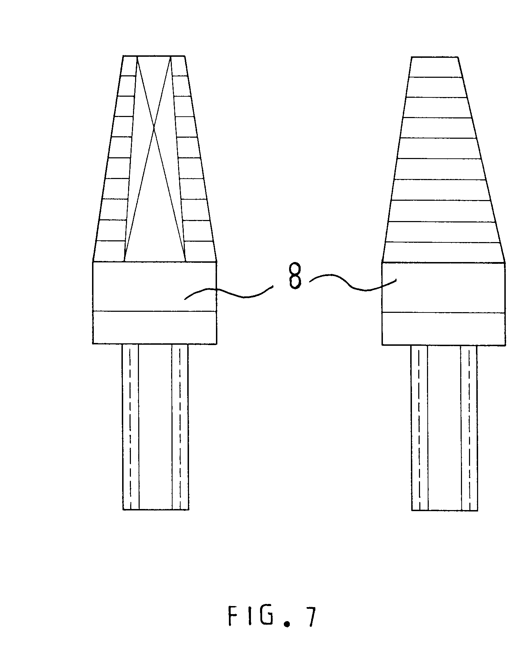

FIGURE 7 .Insert prothètique

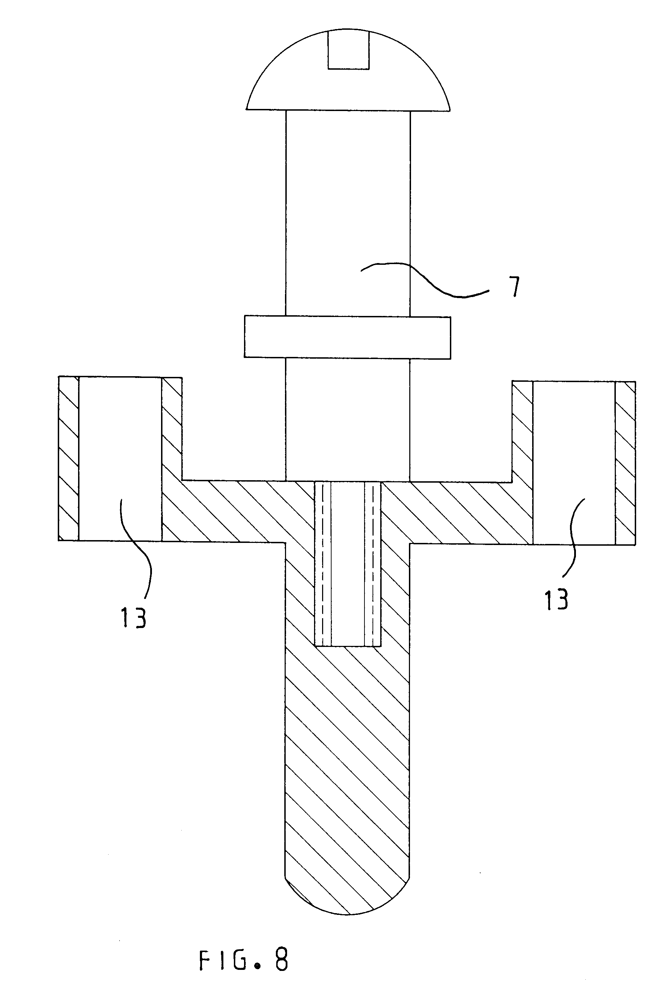

FIGURE 8 .Guide n°1 .Son trou taraudé de vissage de l'élément de préhension , ses deux guides de forage vertical des cylindres latéraux.

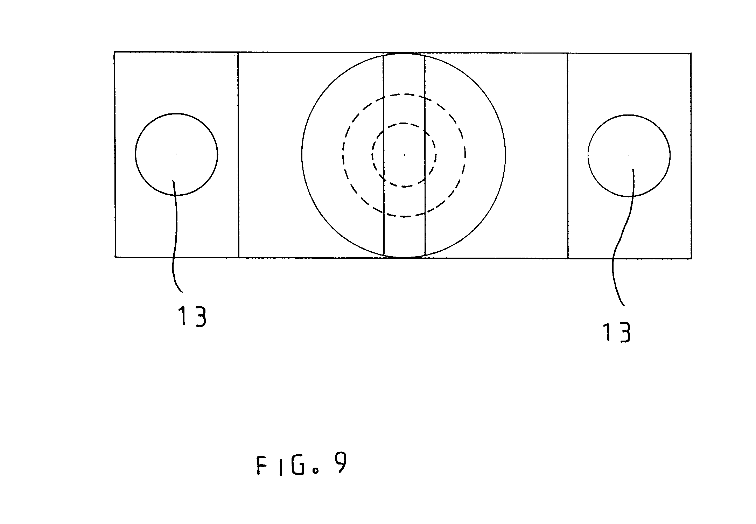

FIGURE 9 .Guide n°1 vu du dessus

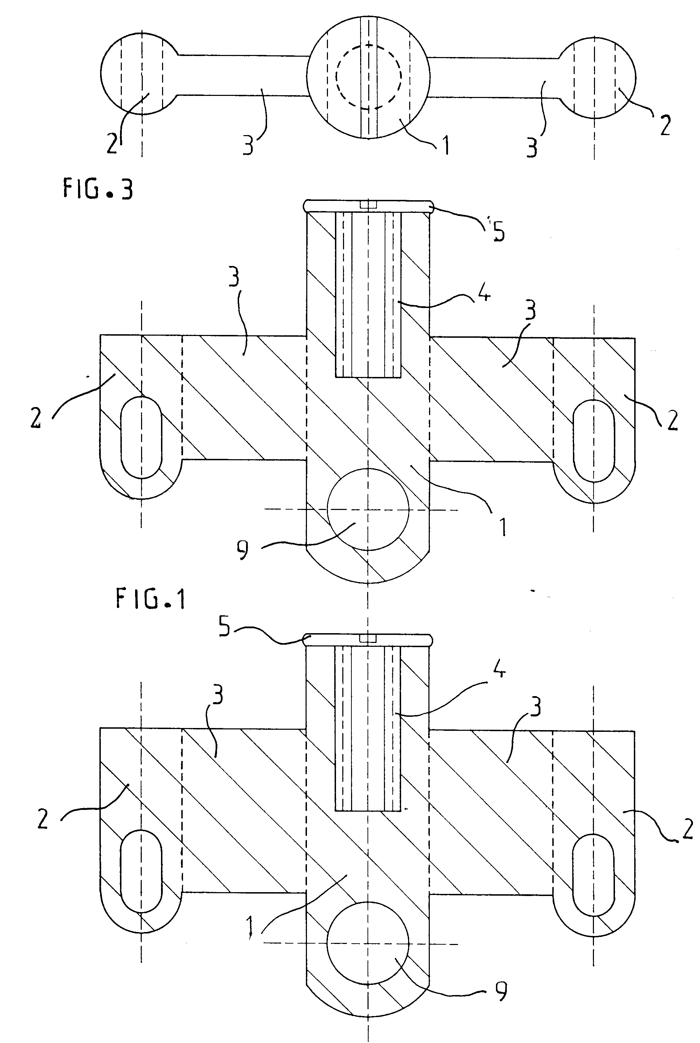

FIGURE 1Ø.Guide n°2 vu de face.Ses deux demi cylindres latéraux permettent le blocage latéral et sagittal du guide.

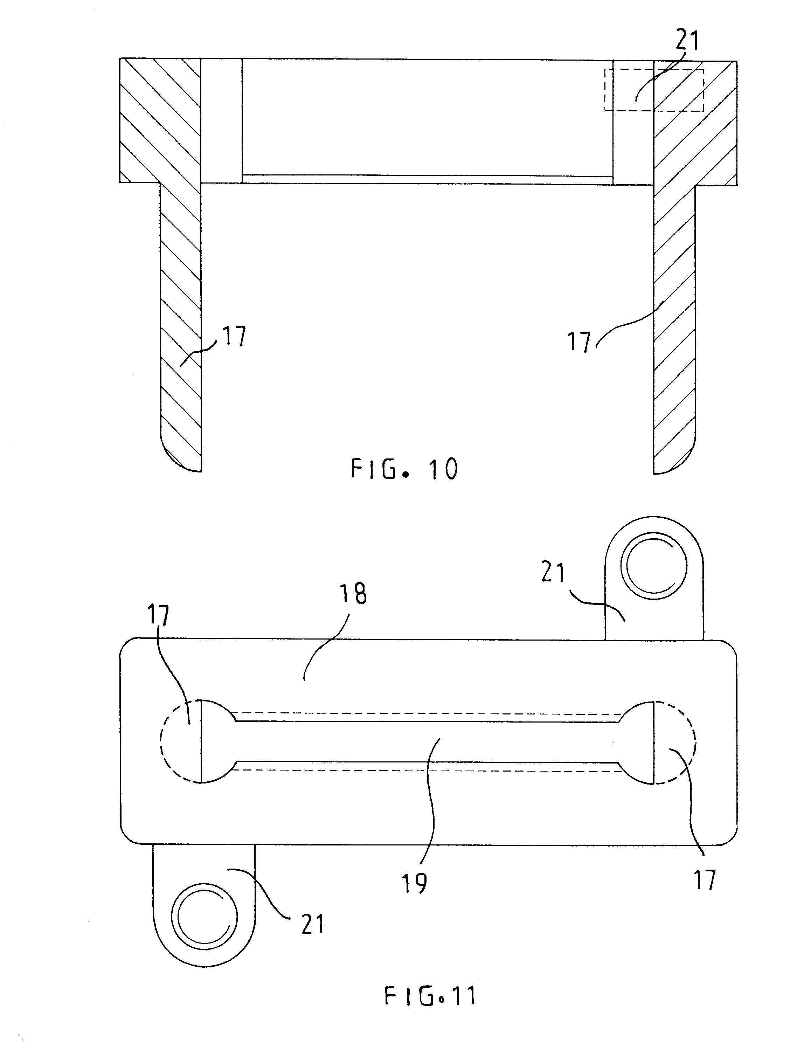

FIGURE 11.Guide n°2 vu du dessus.L'ouverture de fraisage de la tranchée des deux lames.

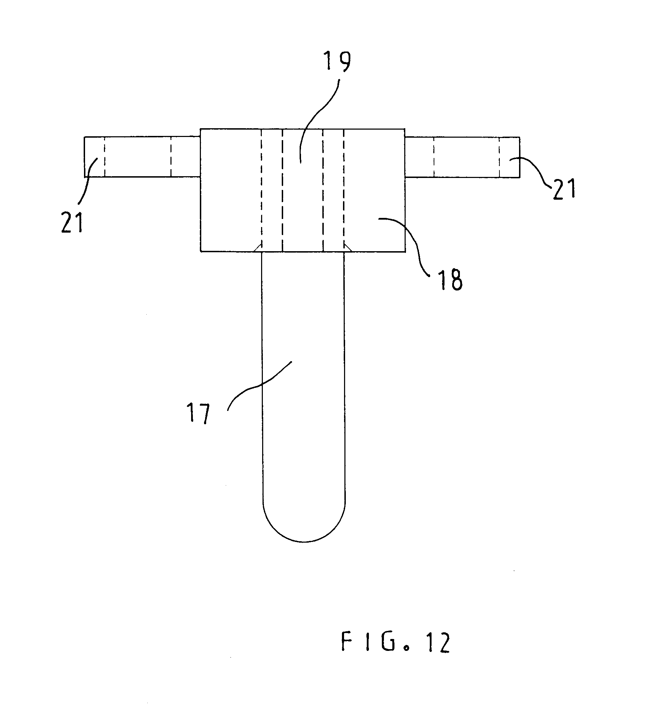

FIGURE 12.Guide n°2 de profil.

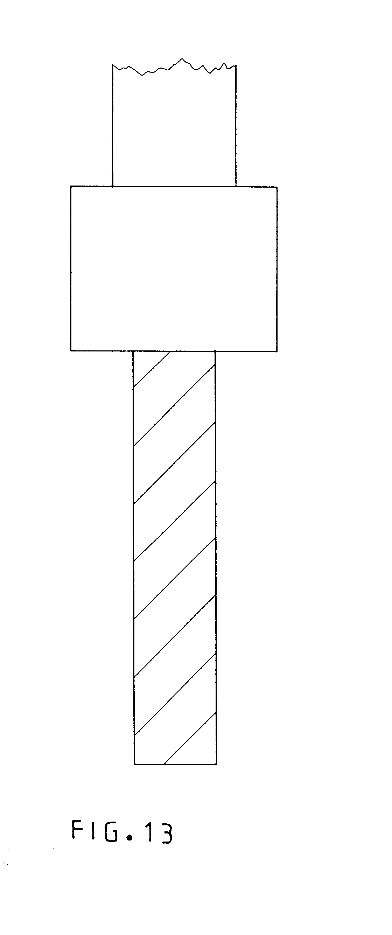

FIGURE 13.Foret de marquage à butée du cylindre central

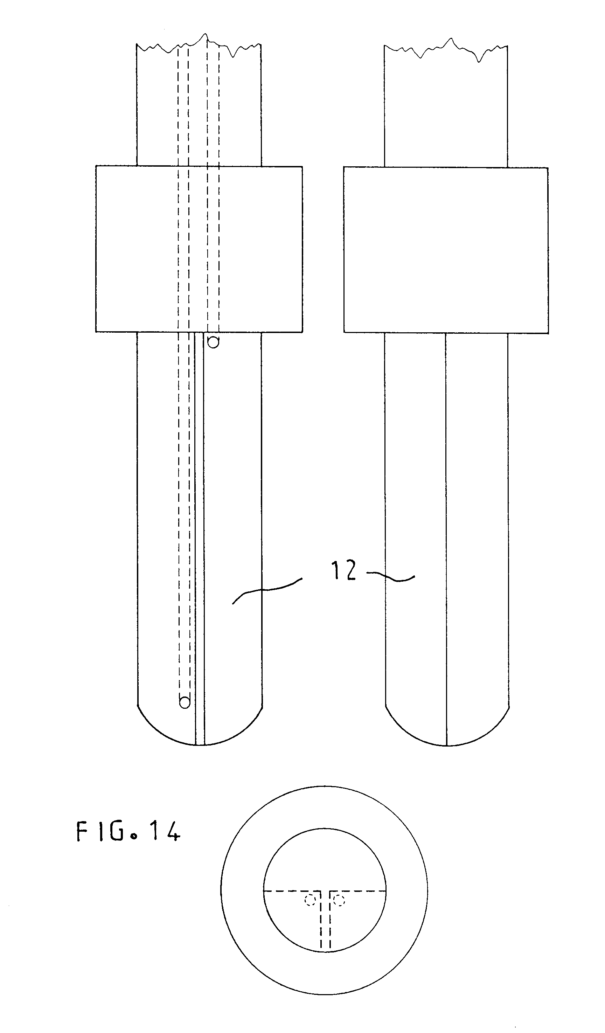

FIGURE 14.Foret de calibrage à butée et à injection interne haute et basse du cylindre central

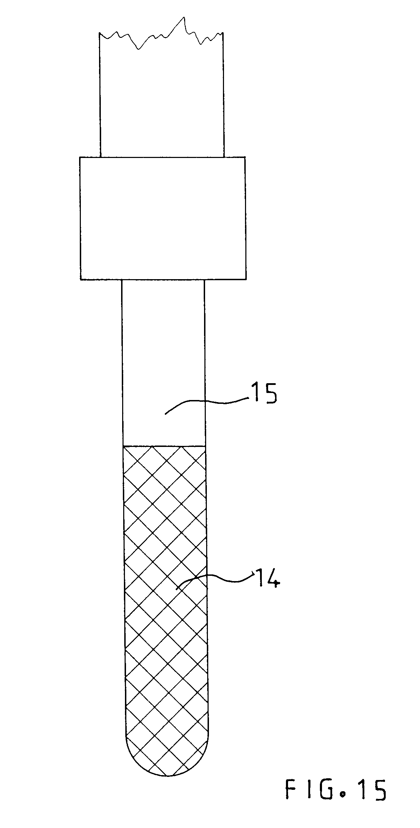

FIGURE 15.Foret de calibrage des cylindres latéraux à segment lisse

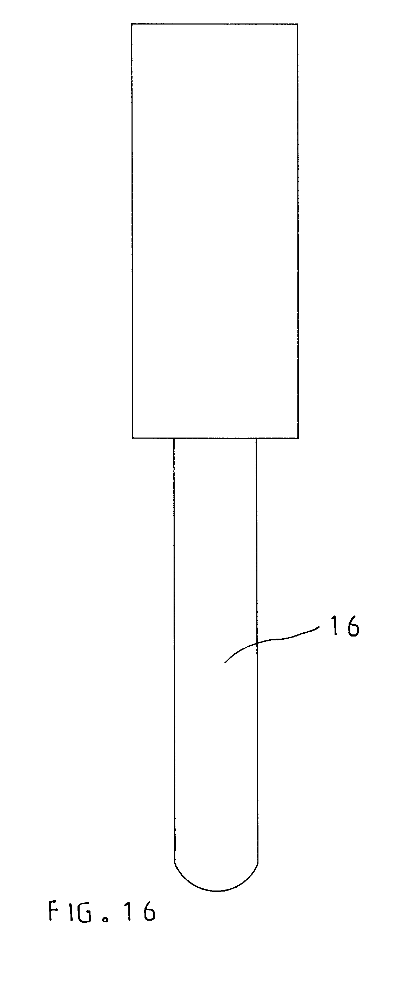

FIGURE 16.Tige de fixation de blocage anti rotatoire du guide n°1

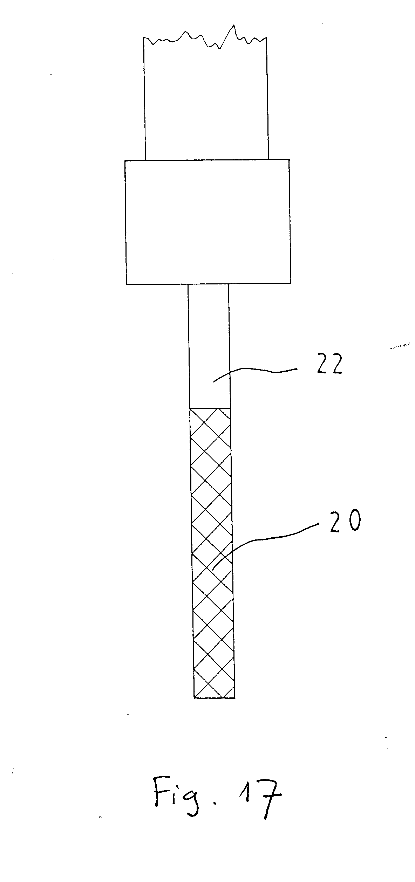

FIGURE 17.Fraise à tranchée de la lame présentant un segment lisse non sécant à sa partie haute près de la butée.

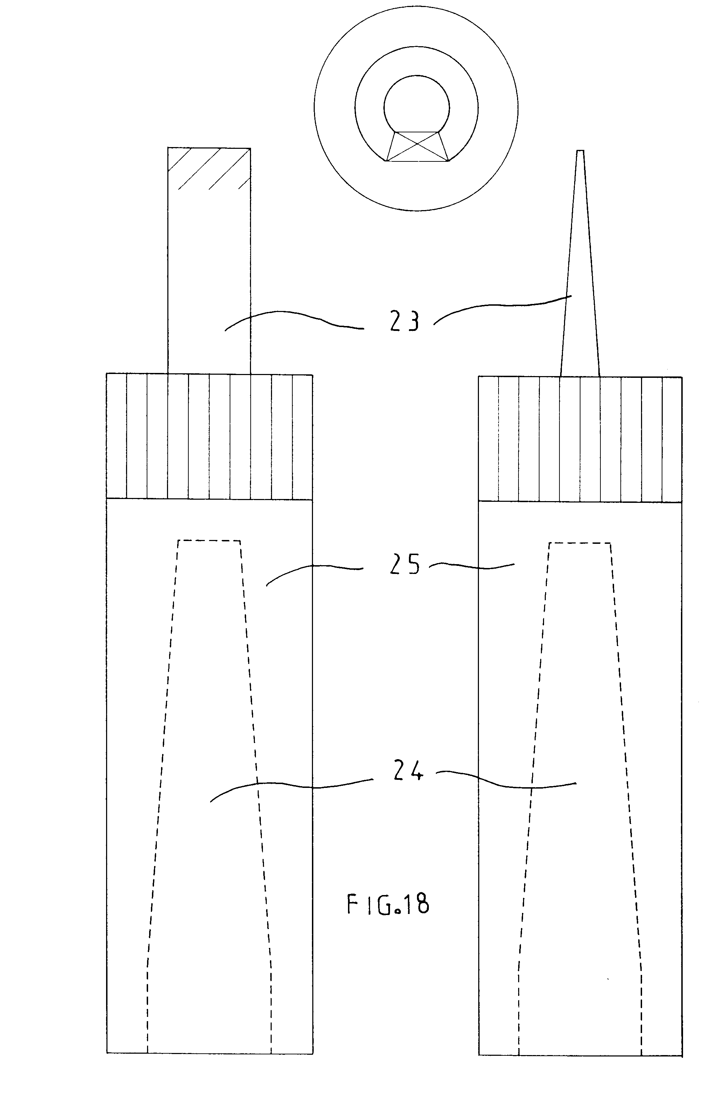

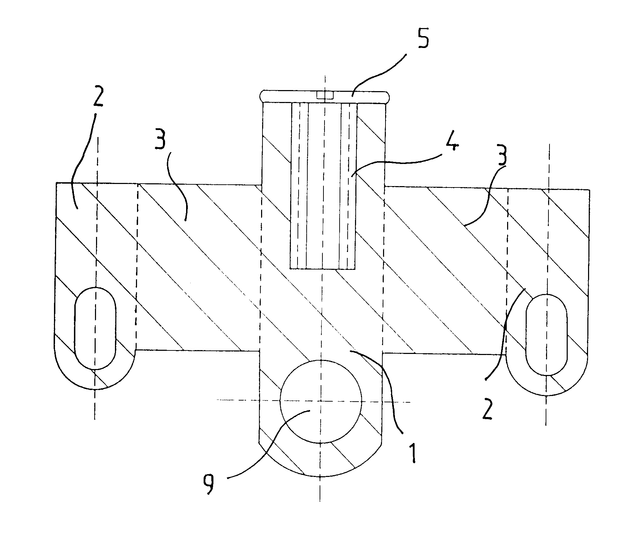

FIGURE 18.Clé double présentant sur une face un tournevis opposé à une clé interne pour vissage de l'élément prothètique.

## Revendications

1/ Implant dentaire caractérisé en ce qu'il est constitué d'un fût cylindrique (1) déterminant l'axe d'insertion préférentiel du système et possèdant dans sa partie superficielle un trou borgne fileté (4). Ce cylindre central, (1) comprenant en sa partie profonde une perforation (9). Ledit cylindre est relié à deux cylindres latéraux (2) par l'intermédiaire de deux lames verticales (3).

2/ Dispositif d'implantation pour la mise en place de l'implant selon la revendication 1 caractérisé en ce qu'il comprend deux guides, le guide n° 1 étant destiné à la réalisation de deux forages calibrés en diamètre et profondeur en vue du positionnement du guide n° 2, ce dernier étant destiné à la réalisation d'une tranchée rectiligne.

3/ Dispositif d'implantation selon la revendication 2 caractérisé en ce que le guide n° 1 comprend un cylindre central et deux guides latéraux calibrés, ces derniers comportant en leur centre une lumière cylindrique (13) assurant un guidage axial du foret de calibrage (14) et la partie cylindrique centrale comportant un trou borgne central (4) pour le vissage du porte implant (7).

4/ Dispositif selon la revendication 3 caractérisé en ce que le guide n° 1 utilise une clavette (16) de blocage anti-rotatoire, à positionner dans l'une des lumières cylindriques (13).

5/ Dispositif selon la revendication 2 caractérisé en ce que le guide n° 2 se compose de deux demi cylindres (17) de diamètre égal au diamètre des puits latéraux préalablement réalisés à l'aide du guide n° 1, d'un élément de liaison horizontal (18) présentant une ouverture (19) pour le passage de la fraise à butée calibrée (20), afin de réaliser la tranchée destinée à recevoir la lame (3) de l'implant.

6/ Instrument de vissage et de devissage des différents éléments filetés de l'implant (5) (6) (7) (8)selon la revendication 1 et des éléments filetés (7) des guides n° 1 et n° 2 selon l'une quelconque des revendications 2 à 5, caractérisé en ce qu'il comporte à une extrémité, un tournevis (23) et à l'extrémité opposée une clé (24) creusée dans le corps (25) dudit instrument.

FIG.3

FIG.1

FIG.2

FIG. 5

FIG. 4

7

FIG. 6

8

FIG. 7

FIG. 8

F I G. 9

21

17                    17

FIG. 10

21

18

17

21

19                    17

FIG. 11

F I G. 12

FIG.13

FIG. 14

FIG. 15

FIG. 16

22

20

Fig. 17

23

25

24

FIG. 18

EP 0 495 711 A1

Office européen
des brevets

**RAPPORT DE RECHERCHE EUROPEENNE**

Numero de la demande

EP     92 40 0098

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | FR-A-2 634 999 (YEUNG) pages 16-30 * page 9, ligne 5 - ligne 9; figures 7,22-42 * * le document en entier * --- | 1-6 | A61C8/00 |
| X | EP-A-0 073 177 (STRAUMANN) * page 16, ligne 12 - page 17, ligne 2; figure 10 * --- | 1 | |
| A | US-A-4 723 913 (BERGMAN) * revendication 1; figures 2-5 * ----- | 1 | |

|  |  | DOMAINES TECHNIQUES RECHERCHES (Int. Cl.5 ) |
|---|---|---|
|  |  | A61C |

Le présent rapport a été établi pour toutes les revendications

| Lieu de la recherche | Date d'achèvement de la recherche | Examinateur |
|---|---|---|
| LA HAYE | 15 AVRIL 1992 | VANRUNXT J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

21